# EUROPEAN PATENT SPECIFICATION

(11) **EP 2 760 065 B1**
(45) Date of publication and mention of the grant of the patent: **13.06.2018**
(21) Application number: 13834318.1
(22) Date of filing: 27.11.2013
(51) Int. Cl.: H01M 4/1391, H01M 4/36, H01M 4/48, H01M 4/62

(54) **METHOD FOR MANUFACTURING AN ANODE SLURRY**
VERFAHREN ZUR HERSTELLUNG EINES ANODENSCHLAMMS
PROCÉDÉ DE FABRICATION D'UNE BOUILLIE D'ANODE

(30) Priority: 30.11.2012 KR 20120138528; 26.11.2013 KR 20130144588
(43) Date of publication of application: 30.07.2014
(73) Proprietor: LG Chem, Ltd., Seoul 150-721 (KR)
(72) Inventor: KANG, Yoon Ah, Daejeon 305-738 (KR) (KR); LEE, Yong Ju, Daejeon 305-738 (KR) (KR); JO, Rae Hwan, Daejeon 305-738 (KR) (KR); KIM, Je Young, Daejeon 305-738 (KR) (KR)
(74) Representative: Goddar, Heinz J.
(86) International application number: PCT/KR2013/010867
(87) International publication number: WO 2014/084611

(56) References cited:
- WO-A1-2007/059687
- JP-A- 2005 135 925
- KR-A- 20100 109 483
- US-A- 6 001 139
- US-A1- 2004 253 517
- US-A1- 2006 068 287
- US-A1- 2007 190 416
- US-A1- 2010 203 392
- US-A1- 2011 068 294
- US-A1- 2011 165 464
- US-A1- 2012 208 083
- LESTRIEZ ET AL: "Functions of polymers in composite electrodes of lithium ion batteries", COMPTES RENDUS - CHIMIE, ELSEVIER, PARIS, FR, vol. 13, no. 11, 29 March 2010 (2010-03-29), pages 1341-1350, XP027423353, ISSN: 1631-0748, DOI: 10.1016/J.CRCI.2010.01.018 [retrieved on 2010-10-15]

## Description

### TECHNICAL FIELD

The present invention relates to a method of preparing an anode slurry including a composite.

### BACKGROUND ART

In line with recent miniaturization and lightweight trends in electronic devices, the miniaturization and weight reduction have also been required for batteries acting as a power source. Lithium-based secondary batteries have been commercialized as a battery that may be miniaturized, light weighted, and charged to high capacity, and the lithium-based secondary batteries have been used in portable electronic devices, such as small video cameras, mobile phones, and notebooks, and communication devices.

Lithium secondary batteries, as an energy storage device having high energy and power, may be advantageous in that capacities or operating voltages thereof are higher than those of other types of batteries. However, since the safety of the batteries may be problematic due to the high energy, there may be a risk of explosion or fire. In particular, since high energy and output characteristics are required for hybrid vehicles that have recently been in the spotlight, it may be considered that the safety is more important.

In general, a lithium secondary battery is composed of a cathode, an anode, and an electrolyte, in which charge and discharge may be possible, because lithium ions, which are discharged from a cathode active material by first charging, may act to transfer energy while moving between both electrodes, for example, the lithium ions are intercalated into an anode active material, i.e., carbon particles, and deintercalated during discharging.

Meanwhile, since there is a continuous need for high-capacity batteries due to the development of portable electronic devices, research into high-capacity anode materials, such as tin (Sn) and silicon (Si), which have significantly higher capacity per unit mass than that of carbon that is used as a typical anode material, have been actively conducted. In the case that Si or a Si alloy is used as an anode active material, volume expansion may increase and cycle characteristics may degrade. In order to address the above limitations, the Si or the Si alloy may be mixed with graphite to be used as the anode active material. However, since the graphite may be non-uniformly distributed during the mixing, the cycle characteristics and lifetime may degrade.

US 2010/203392 A1 discloses a composite comprising SiO particles as a (semi)metal oxide; fibrous carbon as conductive material deposited on the surface of the SiO particles; and polyvinylpyrrolidone as a binder. Said composite is dispersed in Ketjen black as a particulate carbon material and used as an anode in a secondary battery.

US 2012/208083 A1 discloses a paste prepared by mixing a silicon powder with an oxygen content of 18% by weight as semi-metal oxide; acetylene black as conductive material, and carboxymethyl cellulose as an aqueous binder in aqueous solution. This paste is then coated on a copper foil and dried in a vacuum oven at 150°C for 3 hours.

WO 2007/059687 A1 discloses a slurry made with ZnO as metal oxide, carbon black as conductive material and hydroxypropylcellulose and polytetrafluoroethylene as binders. This slurry is subsequently coated on a metal belt and dried at 105°C.

US 6,001,139 A discloses a slurry made comprising a calcined material made with a mixture of SnO and SiO₂ as metal oxides; acetylene black as conductive material and carboxymethylcellulose and polyvinylidene fluoride as binders. The slurry further contains graphite as a particulate carbon material and is coated on a copper foil and dried at 201°C for 30 minutes.

US 2007/190416 A1 discloses composite core particles comprising SiO particles as (semi)metal oxides; fibrous carbon as conductive material deposited on the surface of the SiO particles; and polyvinylpyrrolidone as a binder. This composite is made by spray-drying. Said composite is dispersed in Ketjen black as a particulate carbon material and used as an anode in a secondary battery.

US 2006/068287 A1 discloses a composite made by mixing on a first step SiO particles as a (semi)metal oxide, graphite powder as conductive material and carboxymethylcellulose as an aqueous binder in water. In a further step, these composite particles are mixed with graphite particulate.

### DISCLOSURE OF THE INVENTION

### TECHNICAL PROBLEM

The present invention provides a method of preparing an anode slurry including the composite.

### TECHNICAL SOLUTION

According to an aspect of the present invention, there is provided a method of preparing an anode slurry for a secondary battery, the method comprising: preparing a composite by dispersing a conductive material in an aqueous binder and then mixing with a semi metal oxide or metal oxide, wherein the preparing of the composite is performed by a spray drying method; and mixing the composite with a carbon material and a non-aqueous binder, wherein the carbon material is included in an amount ranging from 20 parts by weight to 80 parts by weight based on a total weight of the composite, wherein the composite comprises: a semi metal oxide or metal oxide; a conductive material on a surface of the semi metal oxide or metal oxide; and a the aqueous binder, wherein the conductive material is selected from the group consisting of carbon black selected from the group consisting of acetylene black, Ketjen black, channel black, furnace black, lamp black, and thermal black; conductive fibers selected from the group consisting of carbon fibers and metal fibers; powder selected from the group consisting of fluorocarbon powder, aluminum powder, and nickel powder; conductive whiskers selected from the group consisting of zinc oxide and potassium titanate; conductive metal oxide including titanium oxide; and a polyphenylene derivative, wherein the carbon material comprises one or more selected from the group consisting of soft carbon, hard carbon, natural graphite, artificial graphite, Kish graphite, pyrolytic carbon, mesophase pitch-based carbon fibers, mesocarbon microbeads, mesophase pitch, petroleum-derived cokes, and coal-derived cokes, wherein the non-aqueous binder comprises one or more selected from the group consisting of polytetrafluoroethylene, polyvinylidene fluoride, polyvinylpyrrolidone, tetrafluoroethylene, polyethylene, and polypropylene, and wherein the aqueous binder comprises one or more selected from the group consisting of a styrene-butadiene rubber, an acrylonitrile-butadiene rubber, an acrylonitrile-butadiene-styrene rubber, carboxymethyl cellulose, and hydroxypropyl methylcellulose.

Further embodiment sare disclosed in the dependent claims.

### ADVANTAGEOUS EFFECTS

According to the present invention, electrical conductivity may be improved by dispersing a conductive material in an aqueous binder and then mixing with a (semi) metal oxide, and a performance, in particular, lifetime characteristics, of a secondary battery may be improved.

### MODE FOR CARRYING OUT THE INVENTION

Provided is a composite including a semi metal oxide or metal oxide (metal(loid) oxide), a conductive material on a surface of the semi metal oxide or metal oxide, and a binder.

The composite may improve electrical conductivity by dispersing a conductive material in an aqueous binder and then mixing with a semi metal oxide or metal oxide, and may improve a performance, in particular, lifetime characteristics, of a secondary battery. In the composite, since the aqueous binder is used as a binder material of an anode, it may be economically efficient. Also, since an amount of the semi metal oxide or metal oxide included in the anode may be increased, a secondary battery having high capacity may be realized.

Specifically, the binder is an aqueous binder, and the binder includes one or more selected from the group consisting of a styrene-butadiene rubber, an acrylonitrile-butadiene rubber, an acrylonitrile-butadiene-styrene rubber, carboxymethyl cellulose, and hydroxypropyl methylcellulose.

Also, in the composite, the semi metal oxide or metal oxide may include one or more selected from the group consisting of SiOₓ, AlOₓ, SnOₓ, SbOₓ, BiOₓ, AsOₓ, GeOₓ, PbOₓ, ZnOₓ, CdOₓ, InOₓ, TiOₓ, and GaOₓ (where 0<x<2), and the (semi) metal oxide may be silicon monoxide.

The conductive material includes one or more selected from the group consisting of carbon black such as carbon black, acetylene black, Ketjen black, channel black, furnace black, lamp black, and thermal black; conductive fibers such as carbon fibers and metal fibers; metal powder such as fluorocarbon powder, aluminum powder, and nickel powder; conductive whiskers such as zinc oxide and potassium titanate; conductive metal oxide such as titanium oxide; and a polyphenylene derivative.

Since the conductive material is dispersed on the surface of the semi metal oxide or metal oxide in the composite, the electrical conductivity may be significantly improved by itself. Furthermore, in a case where the composite is mixed with a carbon material to constitute an anode active material, the electrical conductivity may be further improved due to the electrical conductivity of the carbon material together with the conductive material of the semi metal oxide or metal oxide. Thus, the performance of the secondary battery may be improved.

Also, the present invention provides a method of preparing an anode slurry including preparing a composite by dispersing a conductive material in an aqueous binder and then mixing with a semi metal oxide or metal oxide, and mixing the composite with a carbon material and a non-aqueous binder.

Specifically, a method of preparing an anode slurry according to an embodiment of the present invention includes preparing a composite by dispersing a conductive material in an aqueous binder and then mixing with a semi metal oxide or metal oxide.

The dispersion of the conductive material in the aqueous binder may be performed by mechanical stirring or an ultrasonic wave. Since the mechanical stirring may produce a homogeneous mixture of two or more materials having different physical and chemical properties by using external mechanical energy and the ultrasonic wave may be mainly used to mix or disperse heterogeneous materials that are difficult to be mixed with each other, the mechanical stirring and ultrasonic wave may be used when dispersing the conductive material in the aqueous binder in the anode slurry according to an embodiment of the present invention. However, the present invention is not limited thereto, and any method may be used so long as it may uniformly mix the conductive material in the aqueous binder.

In the method of preparing an anode slurry according to the embodiment of the present invention, the conductive material may be included in an amount ranging from 1 part by weight to 20 parts by weight, for example, 1 part by weight to 10 parts by weight, based on a total weight of the aqueous binder. In the case that the amount of the conductive material is less than 1 part by weight, since the amount of the conductive material is excessively low, an effect due to the use of the conductive material may not be realized. In the case in which the amount of the conductive material is greater than 20 parts by weight, the conductive material may not be well dispersed and the adhesion to the electrode may be decreased due to the excessive amount of the conductive material.

The preparing of the composite is performed by a spray drying method after mixing the semi metal oxide or metal oxide and the aqueous binder in which the conductive material is dispersed. The spray drying method may produce granular powder by substantially removing moisture. The spray drying method may be performed using a spray dryer which includes a drying chamber in which spray drying is substantially performed, a hot air inlet pipe that is connected to the drying chamber and supplies hot air to the drying chamber to remove a dispersant, an air outlet that is connected to the drying chamber to exhaust air cooled during the spray drying, a raw material feed pipe that penetrates a wall constituting the drying chamber and supplies a raw material to the drying chamber to perform spraying, and powder recovery pipes that are connected to the drying chamber to recover powders formed in the drying chamber by the spray drying. However, the present invention is not limited thereto.

The method of preparing an anode slurry according to the embodiment of the present invention includes mixing the composite with a carbon material and a non-aqueous binder.

The carbon material includes one or more selected from the group consisting of soft carbon, hard carbon, natural graphite, artificial graphite, Kish graphite, pyrolytic carbon, mesophase pitch-based carbon fibers, mesocarbon microbeads, mesophase pitch, petroleum-derived cokes, and coal-derived cokes.

Also, the carbon material is included in an amount ranging from 20 parts by weight to 80 parts by weight based on a total weight of the composite. In a case where the amount of the carbon material is out of the above range, an effect due to the use of the composite may be insignificant, in which electrical conductivity is selectively provided by dispersing the conductive material in the (semi) metal oxide.

The non-aqueous binder includes one or more selected from the group consisting of polytetrafluoroethylene (PTFE), polyvinylidene fluoride (PVdF), polyvinylpyrrolidone, tetrafluoroethylene, polyethylene, and polypropylene. In a case where the composite is mixed with the conductive material and the aqueous binder, the conductive material may be separated from the semi metal oxide or metal oxide and the adhesion to an electrode current collector may be reduced. Thus, the non-aqueous binder may be used.

In the method of preparing an anode slurry according to the embodiment of the present invention, a conductive agent may be further included during the mixing of the composite with the carbon material and the non-aqueous binder. The conductive agent may include one or more selected from the group consisting of carbon black such as carbon black, acetylene black, Ketjen black, channel black, furnace black, lamp black, and thermal black; conductive fibers such as carbon fibers and metal fibers; metal powder such as fluorocarbon powder, aluminum powder, and nickel powder; conductive whiskers such as zinc oxide and potassium titanate; conductive metal oxide such as titanium oxide; and a polyphenylene derivative.

Also, provided is an anode active material, in which the composite including a semi metal oxide or metal oxide, a conductive material on a surface of the semi metal oxide or metal oxide, and a binder is dispersed in a carbon material. The composite used according to an embodiment of the present invention may be dispersed in a carbon material when the composite is mixed with the carbon material to constitute the anode active material. The carbon material may be particulate.

Furthermore, provided is a secondary battery including a cathode including a cathode active material; a separator; an anode including the anode active material in which the composite including a semi metal oxide or metal oxide, a conductive material on a surface of the semi metal oxide or metal oxide, and a binder is dispersed in a carbon material; and an electrolyte.

Since the secondary battery includes the composite of the present invention as an anode active material, the electrical conductivity of the secondary battery may be improved and the performance of the secondary battery may be improved.

The anode, for example, may be prepared by coating an anode current collector with a mixture of an anode active material, a conductive agent, and a binder, and then drying the coated anode current collector. If necessary, a filler may be further added. The cathode may also be prepared by coating a cathode current collector with a cathode active material and drying the coated cathode current collector.

The separator is disposed between the cathode and the anode, and a thin insulating film having high ion permeability and mechanical strength may be used as the separator. Since the current collectors, electrode active materials, conductive agent, binder, filler, separator, electrolyte, and lithium salt are known in the art, the detailed descriptions thereof are omitted in the present specification.

The separator is disposed between the cathode and the anode to form a battery structure, the battery structure is wound or folded to put in a cylindrical battery case or prismatic battery case, and then a secondary battery is completed when the electrolyte is injected thereinto. Also, the battery structure is stacked in a bi-cell structure, impregnated with the electrolyte, and a secondary battery is then completed when the product thus obtained is put in a pouch and sealed.

Hereinafter, the present invention will be described in detail, according to specific examples. The invention may, however, be embodied in many different forms and should not be construed as being limited to the embodiments set forth herein.

### Example 1: Preparation of Composite

In 0.1 g of a styrene-butadiene rubber, 5 parts by weight of carbon black based on a total weight of the styrene-butadiene rubber was dispersed by mechanical stirring and the dispersion thus obtained was then mixed with 5 g of silicon monoxide. Then, a composite was prepared by a spray drying method. In this case, the styrene-butadiene rubber may prevent the detachment of the carbon black from the surface of the silicon monoxide.

### Example 2: Preparation of Anode slurry

The composite prepared in Example 1 was mixed with natural graphite, carbon black, and polytetrafluoroethylene at a weight ratio of 40:55:2:3 to prepare an anode slurry.

### Comparative Example 1: Preparation of Anode Slurry

An anode slurry was prepared in the same manner as in Example 2 except that commercial silicon monoxide was used instead of using the composite prepared in Example 1.

### Example 3: Preparation of Secondary Battery

One surface of a copper current collector was coated with the anode slurry prepared in Example 2 to a thickness of 65 µm, dried and rolled. Then, an anode was prepared by punching into a predetermined size.

LiPF₆ was added to a non-aqueous electrolyte solvent prepared by mixing ethylene carbonate and diethyl carbonate at a volume ratio of 30:70 to prepare a 1 M LiPF₆ non-aqueous electrolyte solution.

A lithium foil was used as a counter electrode, a polyolefin separator was disposed between both electrodes, and a coin-type secondary battery was then prepared by injecting the electrolyte solution.

### Comparative Example 2: Preparation of Secondary Battery

A secondary battery was prepared in the same manner as in Example 3 except that the anode slurry prepared in Comparative Example 1 was used.

### Experimental Example 1: Lifetime Characteristics and Capacity Characteristics Analysis

In order to investigate capacity characteristics and lifetime characteristics of the secondary batteries prepared in Example 3 and Comparative Example 2 according to charge and discharge cycles, the secondary batteries prepared in Example 3 and Comparative Example 2 were charged at 0.1 C to a voltage of 5 mV and charged to a current of 0.005 C at 5 mV under constant current/constant voltage (CC/CV) conditions at 23°C, and then discharged at 0.1 C to a voltage of 1.5 V under a constant current (CC) condition to measure capacities.

Thereafter, the secondary batteries prepared in Example 6 and Comparative Example 2 were charged at 0.5 C to a voltage of 5 mV and charged to a current of 0.005 C at 5 mV under constant current/constant voltage (CC/CV) conditions, and then discharged at 0.5 C to a voltage of 1.0 V under a constant current (CC) condition. This charge and discharge cycle was repeated 1 to 50 times. The results thereof are presented in Table 1 below.

**[Table 1]**

| Examples | Capacity (mAh/g) | Lifetime characteristics (%) |
|---|---|---|
| Example 3 | 716 | 95.8 |
| Comparative Example 2 | 723 | 83.7 |

- Lifetime characteristics: (discharge capacity in a 49th cycle/ discharge capacity in the first cycle) x 100

As illustrated in Table 1, it may be understood that the lifetime characteristics of the secondary battery of Example 3 using the composite prepared according to Example 1 of the present invention in the anode active material were improved to about 12% in comparison to the secondary battery of Comparative Example 2 using the silicon monoxide prepared according to Comparative Example 1 in the anode active material. With respect to the secondary battery of Example 3, the capacity characteristics were slightly lower than those of the secondary battery of Comparative Example 2. However, this was within the error range.

Therefore, since the composite including a (semi) metal oxide, a conductive material on a surface of the (semi) metal oxide, and a binder was used in the anode active material, the electrical conductivity may be improved in comparison to using a typical silicon-based anode active material. As a result, it was confirmed that the lifetime characteristics of the secondary battery was further improved.

### INDUSTRIAL APPLICABILITY

According to the present invention, since electrical conductivity may be improved by dispersing a conductive material in an aqueous binder and then mixing with a (semi) metal oxide, a performance, in particular, lifetime characteristics, of a secondary battery may be improved. Thus, the present invention may be suitable for secondary batteries.

## Claims

1. A method of preparing an anode slurry for a secondary battery, the method comprising:
preparing a composite by dispersing a conductive material in an aqueous binder and then mixing with a semi metal oxide or metal oxide, wherein the preparing of the composite is performed by a spray drying method; and
mixing the composite with a carbon material and a non-aqueous binder, wherein the carbon material is included in an amount ranging from 20 parts by weight to 80 parts by weight based on a total weight of the composite,
wherein the composite comprises:
a semi metal oxide or metal oxide;
a conductive material on a surface of the semi metal oxide or metal oxide; and
the aqueous binder,
wherein the conductive material is selected from the group consisting of carbon black selected from the group consisting of acetylene black, Ketjen black, channel black, furnace black, lamp black, and thermal black; conductive fibers selected from the group consisting of carbon fibers and metal fibers; powder selected from the group consisting of fluorocarbon powder, aluminum powder, and nickel powder; conductive whiskers selected from the group consisting of zinc oxide and potassium titanate; conductive metal oxide including titanium oxide; and a polyphenylene derivative,
wherein the carbon material comprises one or more selected from the group consisting of soft carbon, hard carbon, natural graphite, artificial graphite, Kish graphite, pyrolytic carbon, mesophase pitch-based carbon fibers, mesocarbon microbeads, mesophase pitch, petroleum-derived cokes, and coal-derived cokes,
wherein the non-aqueous binder comprises one or more selected from the group consisting of polytetrafluoroethylene, polyvinylidene fluoride, polyvinylpyrrolidone, tetrafluoroethylene, polyethylene, and polypropylene, and
wherein the aqueous binder comprises one or more selected from the group consisting of a styrene-butadiene rubber, an acrylonitrile-butadiene rubber, an acrylonitrile-butadiene-styrene rubber, carboxymethyl cellulose, and hydroxypropyl methylcellulose.

2. The method of claim 1, wherein the conductive material is included in an amount ranging from 1 part by weight to 20 parts by weight based on a total weight of the aqueous binder.

3. The method of claim 1, wherein a conductive agent is further included during the mixing of the composite with the carbon material and the non-aqueous binder.

4. The method of claim 1, wherein the semi metal oxide or metal oxide comprises one or more selected from the group consisting of SiOₓ, AlOₓ, SnOₓ, SbOₓ, BiOₓ, AsOₓ, GeOₓ, PbOₓ, ZnOₓ, CdOₓ, InOₓ, TiOₓ, and GaOₓ,
where 0<x<2.

## Patentansprüche

1. Verfahren zum Herstellen einer Anodenslurry für eine Sekundärbatterie, wobei das Verfahren umfasst:
Herstellen eines Verbunds durch Dispergieren eines leitfähigen Materials in einem wässrigen Bindemittel und dann Mischen mit einem Halbmetalloxid oder Metalloxid, wobei das Herstellen des Verbunds durch ein Sprühtrocknungsverfahren durchgeführt wird; und
Mischen des Verbunds mit einem Kohlenstoffmaterial und einem nicht wässrigen Bindemittel, wobei das Kohlenstoffmaterial in einer Menge im Bereich von 20 Gewichtsteilen bis 80 Gewichtsteilen, basierend auf einem Gesamtgewicht des Verbunds, eingeschlossen ist,
wobei der Verbund umfasst:
ein Halbmetalloxid oder Metalloxid;
ein leitfähiges Material auf einer Oberfläche des Halbmetalloxids oder des Metalloxids; und
das wässrige Bindemittel,
wobei das leitfähige Material ausgewählt wird aus der Gruppe bestehend aus Kohlenstoffruß ausgewählt aus der Gruppe bestehend aus Acetylenruß, Ketjenruß, Kanalruß, Ofenruß, Lampenruß und thermischem Ruß; leitfähigen Fasern ausgewählt aus der Gruppe bestehend aus Kohlefasern und Metallfasern; Pulver ausgewählt aus der Gruppe bestehend aus Fluorkohlenstoffpulver, Aluminiumpulver und Nickelpulver; leitfähigen Whiskern ausgewählt aus der Gruppe bestehend aus Zinkoxid und Kaliumtitanat; leitfähigem Metalloxid einschließend Titanoxid; und einem Polyphenylenderivat,
wobei das Kohlenstoffmaterial eines oder mehrere umfasst, ausgewählt aus der Gruppe bestehend aus weichem Kohlenstoff, hartem Kohlenstoff, natürlichem Graphit, künstlichem Graphit, Kish-Graphit, pyrolytischem Kohlenstoff, Mesophasen-Kohlenstofffasern auf Pechbasis, Mesokohlenstoffmikrokügelchen, Mesophasenpech, von Öl erhaltenen Koken und von Kohle erhaltenen Koken,
wobei das nicht wässrige Bindemittel eines oder mehrere umfasst ausgewählt aus der Gruppe bestehend aus Polytetrafluorethylen, Polyvinylidenfluorid, Polyvinylpyrrolidon, Tetrafluorethylen, Polyethylen und Polypropylen, und
wobei das wässrige Bindemittel eines oder mehrere umfasst ausgewählt aus der Gruppe bestehend aus einem Styrol-Butadien-Kautschuk, einem Acrylnitril-Butadien-Kautschuk, einem Acrylnitril-Butadien-Styrol-Kautschuk, Carboxymethylcellulose und Hydroxypropylmethylcellulose.

2. Verfahren nach Anspruch 1, wobei das leitfähige Material in einer Menge im Bereich von 1 Gewichtsteil bis 20 Gewichtsteilen, basierend auf einem Gesamtgewicht des wässrigen Bindemittels, eingeschlossen ist.

3. Verfahren nach Anspruch 1, wobei ein leitfähiges Agens ferner während des Mischens des Verbunds mit dem Kohlenstoffmaterial und dem nicht wässrigen Bindemittel eingeschlossen ist.

4. Verfahren nach Anspruch 1, wobei das Halbmetalloxid oder Metalloxid eines oder mehrere umfasst ausgewählt aus der Gruppe bestehend aus SiOₓ, AlOₓ, SnOₓ, SbOₓ, BiOₓ, AsOₓ, GeOₓ, PbOₓ, ZnOₓ, CdOₓ, InOₓ, TiOₓ und GaOₓ,
wobei 0<x<2 ist.

## Revendications

1. Procédé de préparation d'une bouillie d'anode pour une batterie secondaire, le procédé comprenant les étapes consistant à :
préparer un composite en dispersant un matériau conducteur dans un liant aqueux et en le mélangeant ensuite avec un oxyde de semi-métal ou un oxyde de métal, la préparation du composite étant réalisée par un procédé de séchage par atomisation ; et
mélanger le composite avec un matériau carboné et un liant non aqueux, le matériau carboné étant incorporé en une quantité allant de 20 parties en poids à 80 parties en poids par rapport au poids total du composite,
le composite comprenant :
un oxyde de semi-métal ou un oxyde de métal ;
un matériau conducteur sur une surface de l'oxyde de semi-métal ou de l'oxyde de métal ; et
le liant aqueux,
dans lequel le matériau conducteur est sélectionné dans le groupe constitué de noir de carbone sélectionné dans le groupe constitué de noir d'acétylène, de noir de Ketjen, de noir de carbone, de noir de fourneau, de noir de fumée et de noir thermique ; de fibres conductrices sélectionnées dans le groupe constitué de fibres de carbone et de fibres métalliques ; de poudre sélectionnée dans le groupe constitué de poudre de fluorocarbone, de poudre d'aluminium et de poudre de nickel ; de barbes conductrices sélectionnées dans le groupe constitué d'oxyde de zinc et de titanate de potassium ; d'oxyde de métal conducteur contenant de l'oxyde de titane ; et d'un dérivé de polyphénylène,
dans lequel le matériau de carbone comprend un ou plusieurs composés sélectionnés dans le groupe constitué de carbone doux, de carbone dur, de graphite naturel, de graphite artificiel, de graphite primaire, de carbone pyrolytique, de fibres de carbone à base de brai de mésophase, de microperles de mésocarbone, de brai mésophasique, de cokes dérivés du pétrole et de cokes dérivés du charbon,
dans lequel le liant non aqueux comprend un ou plusieurs composés sélectionnés dans le grouper constitué de polytétrafluoroéthylène, de fluorure de polyvinylifène, de polyvinylpyrrolidone, de tétrafluoroéthylène, de polyéthylène et de polypropylène, et
dans lequel le liant aqueux comprend un ou plusieurs composés sélectionnés dans le groupe constitué d'un caoutchouc de styrène-butadiène, d'un caoutchouc d'acrylonitrile-butadiène-styrène, de cellulose carboxyméthylique, et de méthylcellulose hydroxypropylique.

2. Procédé selon la revendication 1, dans lequel le matériau conducteur est en outre incorporé en une quantité allant d'une partie en poids à 20 parties en poids par rapport à un poids total du liant aqueux.

3. Procédé selon la revendication 1, dans lequel un agent conducteur est en outre incorporé durant le mélange du composite avec le matériau de carbone et le liant non aqueux.

4. Procédé selon la revendication 1, dans lequel l'oxyde de semi-métal ou l'oxyde de métal comprend un ou plusieurs composés sélectionnés dans le groupe constitué de SiOₓ, AlOₓ, SnOₓ, SbOₓ, BiOₓ, AsOₓ, GeOₓ, PbOₓ, ZnOₓ, CdOₓ, InOₓ, TiOₓ et de GaO_{x'}
où 0 < x < 2.
